# EUROPEAN PATENT APPLICATION

(11) **EP 0 964 567 A2**
(43) Date of publication of application: **15.12.1999**
(21) Application number: 99304591.3
(22) Date of filing: 11.06.1999
(51) Int. Cl.: H04M 7/00

(54) **A programmable telecommunications interface for communication over a data network**

(30) Priority: 12.06.1998 US 89021 P; 14.08.1998 US 96512 P
(71) Applicant: Alcatel USA Sourcing, L.P., Plano, TX 75075 (US)
(72) Inventor: Lee, Charles C., Plano, Texas 75074 (US); Weser, Michael J., Richardson, Texas 75050 (US); Olsen, James T., Plano, Texas 75093 (US); O'Pella, Larry J., Plano, Texas 75075 (US); Stevens, Gilman R., Fairview, Texas 75069 (US); Zolkoski, Michael S., Plano, Texas 75093 (US); Thomason, Michael, Dallas, Texas 75206 (US)
(74) Representative: Finnie, Peter John

(57) **Abstract**

A telecommunications system includes the public switched telephone system (PSTN) and a data network (6), such as the Internet. Voice over IP (VoIP) boards (48) communicate between the PSTN and the data network (6) under control of a programmable service logic execution environment (12). Telephone services between and among the Internet (6) and the PSTN can be initiated by a JAVA applet. By packetizing the PSTN bearer channel, enhances resources can be provided, such as sophisticated conferencing, speech-to-text, e-mail to voice, and so on.

## Description

This invention relates in general to telecommunications and, more particularly, to a programmable telecommunications interface.

H.323 is a multimedia communications protocol which promises to have a significant impact on many multimedia applications, such as videoconferencing, Internet telephony, conference calling, and gaming, to name a few. The H.323 standard provides support for audio and video over IP (Internet Protocol) based networks, as well as for data communications. The Internet is one such data network which will benefit from H.323.

H.323 provides compatibility between devices which would otherwise be subject to proprietary solutions. For example, H.323 specifies standards for audio/video compression and decompression and for communicating device capabilities, common call setup and call control. H.323 supports conferences of three or more endpoints without required use of a multipoint control unit and supports multicast transport in multipoint conferences. Further, the bandwidth of audio and video streams can be managed by network managers.

Despite the advantages of H.323 devices, issues remain. In order to support an H.323 compliant network, a number of communications devices must be designed. Rapid service development and deployment of these devices is therefore an important challenge to the communications industry. Further, like many standards, H.323 will likely evolve over time or may be supplanted by other protocols. In either case, reprogramming the H.323 devices could be extremely costly and time consuming.

Further, while H.323 provides protocols for communications over a data network, digital telephone remains primitive and difficult for users.

Therefore, a need exists in the industry enhanced telephony using a digital multimedia protocol.

According to a first aspect of the present invention, a telecommunications system comprises: a public switched telephone system:
a data network;
interface circuitry coupled between said public switched telephone system and said data network for translating between analog voice signals and a stream of packetized voice signals; and,
circuit circuitry coupled to said public switched telephone network and said data network to control communication within and between said public switched telephone system and said data network.

According to a second aspect of the present invention, a service control point for use with a multimedia communication protocol comprises:
a database;
a database manager coupled to said database;
a programmable execution unit coupled to said database manager; and,
a language server coupled to the programmable execution unit to communicate with applications executed on client terminals coupled to said language server via a data network.

The invention provides significant advantages over the prior art. First, the use of a programmable service logic execution environment (SLEE) in the network devices provides for rapid development and deployment of products and for flexible implementation of services. Second, the invention can be used to gain control of telephone calls, even those originating and/or terminating on the PSTN, in a digital domain. One particular embodiment of the capability would be in conference calling, where callers could control the conference via a web browser. This would enable callers to have private conversations with another conference caller, and so on, while the conference was ongoing, even if one or more of the participants was connecting through the PSTN. The services are seamless to the users, who have the same functionality whether independent of whether lines of communication originate or terminate on the Internet or the PSTN. Third, telephony services can be initiated via JAVA applets (or a similar software structure, which is preferably processor independent) which can enhance and simplify telecommunications services to users.

Examples of the present invention will now be described in detail with reference to the accompanying drawings, in which:
Figure 1a illustrates a block diagram of an IN (intelligent network) controller coupled to a network, such as the Internet, and the PSTN;
Figures 1b and 1c illustrate functional block diagrams of an SCP;
Figure 2 illustrates a functional block diagram of a gatekeeper;
Figure 3 illustrates a functional block diagram of a gateway;
Figure 4 illustrates a block diagram of a telecommunications system using the gatekeeper and gateway of Figures 2 and 3;
Figure 5 illustrates a functional block diagram of an ISN device;
Figure 6 illustrates a functional block diagram of an IP device;
Figures 7a-d illustrate a flow diagram of a call center application with associated browser screens; and,
Figure 8 illustrates a function block diagram of an SMS.

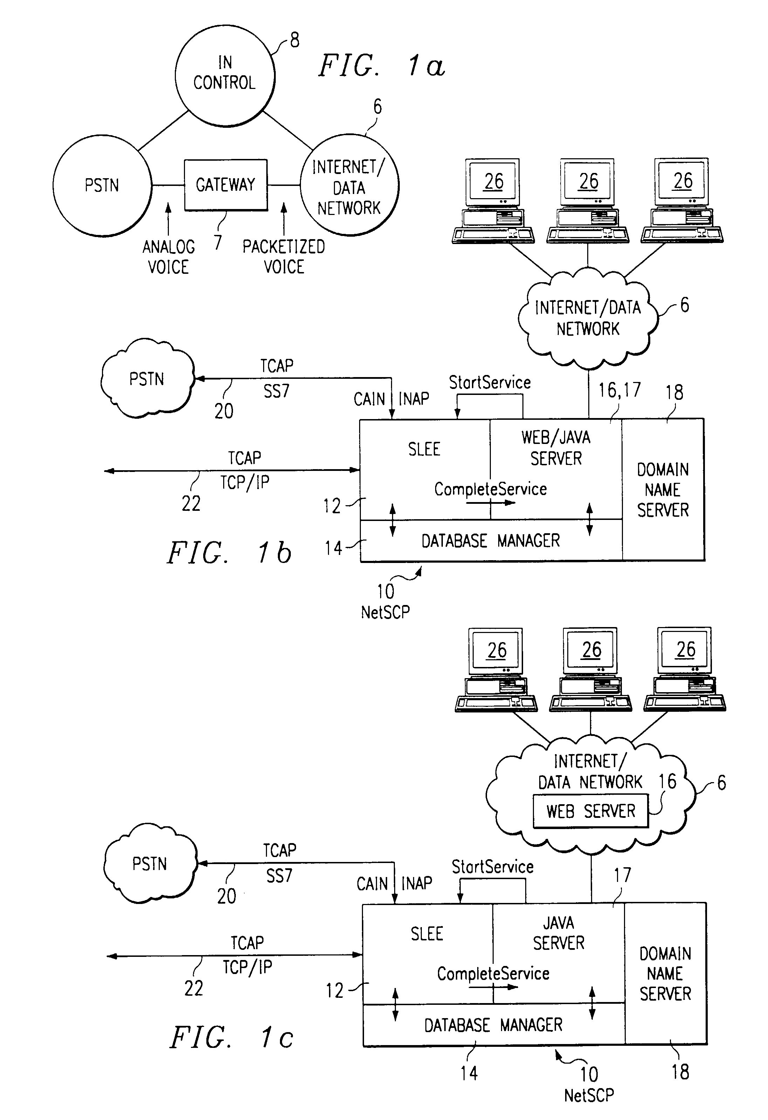

Figure 1a illustrates a block diagram of a telecommunications network, where intelligent network (IN) services can be applied to both a network, such as the Internet, and the public switched telephone network (PSTN), including both wireline and wireless services. In Figure la, the PSTN and the Internet, or other data network (hereinafter Internet/Data Network 6) are coupled via a gateway 7, such as a H.323 interface or other suitable interface. An IN controller 8 is coupled to both the Internet/Data Network 6 and the PSTN. The IN controller 8 is coupled to the Internet/Data Network 6 by a TCP/IP or other suitable connection and to the PSTN by an SS7 or other suitable connection.

The architecture shown in Figure 1a can provide enhanced services to both the Internet/Data Network 6 and to the PSTN. The IN Controller 8 provides programmable services to both the Internet/Data Network 8 and the PSTN (and to communications between the two) using asynchronous messaging with a programmable state machine, and a service logic execution environment (SLEE). As described in greater detail below, this architecture provides intra-PSTN communications, intra-Internet/Data Network communications and inter-PSTN-Internet/Data Network communications with enhanced functionality which is seamless and transparent to the users. The IN Controller 8 allows IN services to be applied to the Internet, and provides enhanced services to the PSTN by controlling operating on the bearer channel of the PSTN while it is packetized.

Figure 1b illustrates a functional block diagram of a preferred embodiment of a service control point (SCP) 10 used in conjunction with an H.323 protocol, or other multimedia communication protocol. The SCP 10 comprises a SLEE 12, database manager 14, Web server 16 and a JAVA server 17 and a Domain Name server 18. The SLEE sends and receives information via a standard TCAP (Transaction Capabilities Application Part ) message over SS7 (Signaling System 7) line 20 and via a TCAP message over TCP/IP line 22. The SLEE 12 communicates with the database manager 14. Web Server 16 and JAVA server 17. The Web server 16 and JAVA server 17 communicate with the database manager 14 and the domain name server 18. The Web server 16 and JAVA server 17 also communicate with browser (communication) software 26 over the Internet/Data Network 6.

In operation, the functional block diagram of Figure 1 can be implemented on one or more computers, such as SUN Solaris computers. The database manager, could be, for example, the SYBASE database manager. The SLEE 12 is preferably a programmable SLEE. Programmable SLEEs are discussed in detail in U.S. Ser. No. 08/917,674, entitled "System and Method for Communicating Transaction Capabilities Application Part Information" to Lin et al, filed August 21, 1997 and U.S. Ser. No. 08/918,693 entitled "System and Method for Implementing Transaction Capabilities Application Part Communication Protocol" to Lin et al, filed August 21, 1997, both of which are incorporated by reference herein. The U.S. Ser. Nos. 08/917,674 and 08/917,693 patents relate to a programmable TCAP SLEE. A programmable ISUP/TCAP SLEE is described in U.S. Ser. No. 09/317,347, filed May 24, 1999, entitled "AIN/IN SSP Extension Product" to Stevens et al (based on provisional application Ser. No. 60/086,971, entitled "AIN/IN SSP Extension Product" to Stevens et al, filed May 28, 1998), which is also incorporated by reference herein.

The purpose of the SLEE is to execute previously created service logic programs (SLPs). The SLP's provide telephony services, which can be initiated through the Internet using JAVA applets. A programmable SLEE uses message definition files which define all available messages in an editable file. The message definition files can be easily modified to accommodate modifications and additions to a protocol. In U.S. Ser. No. (provisional application Ser. No. 60/086,971), referenced above, the SLEE uses both a TMD file (TCAP message definition file) for messages received in TCAP and an IMD file (ISUP message definition file) for messages received in ISUP.

The combination of a programmable TCAP SLEE 12 and a database manager 14 is sold as the INFUSION SCP by DSC Communications Corporation of Plano, Texas.

The Web server 16 and JAVA server 17 could be implemented on the same computer as the SLEE 12 and/or the database manager 14, or could be implemented on a computer connected to one or more other computers performing the tasks of the SLEE 12 and the database manager 14. In an alternative embodiment shown in Figure 1c, the Web server 16 is remote from the computer hosting the JAVA Server 17, and is connected to the JAVA server 17 over a TCP/IP connection.

The purpose of the Web server 16 is to communicate with client browser software and to service requests for information transfers from the browser software. Several companies, such as MICROSOFT Corporation and NETSCAPE Communications Corporation provide Web Server software for a variety of computer platforms.

The JAVA server 17 manages sockets to communicate with the JAVA applets running on the client browsers 26. It should be noted that while the present invention is discussed in connection with JAVA as a programming language used to convey information between the client browsers and a telecommunications device (in this case and SCP), other languages, either currently available or later developed, could also be used.

The domain name server 18 is a dynamic database which can be updated over the Internet/Data Network 6 to provide enhanced services. Some of these services are described in U.S. Ser. No. 09/201,460, entitled "Method and Apparatus for Dynamic Domain Names" to Weser et al, filed November 30. 1998 (based on U.S. Ser. No. 60/067,231, filed December 3, 1997), in U.S. Ser. No. 09/201,248, entitled "Digital Phone System" to Weser et al, filed November 30, 1998 (based on U.S. Ser. No. 60/067,233, filed December 2, 1997), and in U.S. Ser. No. 60/096,487, entitled "Method and Apparatus for a Dynamic ILS", to Lee Jr. et al, filed August 14, 1998, all of which are incorporated by reference herein.

The association between an IP address and a name in the dynamic domain name server 18 may change based on any number of parameters. One such parameter would be time of day. An on-line catalog company, for example, may direct orders during morning hours to a first web site with a first physical address and direct calls during afternoon hours to a second web site with a second physical address.

Intelligent processing of a domain name could be particularly useful in conjunction with digital phones which allow audio (and sometimes video) to be passed over an Internet connection. A digital phone connection over the Internet passes audio/video data packets between two or more IP addresses. Digital phone connections could be used in a number of commercial settings, such as on-line catalog services, where the customer may need to talk to a representative. The SCP 10 could direct a digital phone connection to one of a number of available service representatives at various locations. The digital phone connection could be based on time of day, current load, or other parameters, such as the user's ISP or local exchange carrier. This would allow a representative to work out of various locations, including for example, his or her house, with the SCP 10 directing the digital phone connections to the proper site.

Another parameter which could be used in processing IP addresses is the location of the requesting user. The IN Services could look up the address of a requesting user and connect the user to specific home page or digital phone based on the address. For example, a pizza chain may have a nationwide number. Once called, the dynamic database determines an IP address based on the ANI (automatic number identification) of the call, then uses that address to set up a digital phone connection with the location nearest the user.
Other parameters which may be used to determine an IP address from the dynamic domain name server 18 include time, day of week, the user's telephone number, and other user profile information, such as age, gender, income and so on. Multiple parameters may be used in determining the IP address associated with a dynamic domain name.

It should be noted that non-dynamic domain name servers, of the type typically used in the Internet to look up domain names. may cache addresses from the dynamic domain name server 18, which could alter the functionality of the dynamic nature of the dynamic domain name server 18. In order to prevent caching by other domain name servers, the dynamic domain name server 18 could pass a persistence parameter ("time to live" or "TTL") equal to "0" along with the IP address.

In operation, the SCP 10 is seen as a typical IN (intelligent network) capable SCP by the PSTN through TCAP over SS7/C7 connection 20. Further, the SCP 10 can communicate with other devices over the connection 22, through SLEE 12. Thus, if a PSTN device requires service information from the SCP 10, it can retrieve it from database manager 14 through SLEE 12 as usual.

Other devices may obtain information from the dynamic domain name server 18 (and the database manager 14) from SCP through connection 22. In the illustrated embodiment, SLEE 12 communicates in the TCAP protocol. If communication using other protocols is desired, translation software may be added to allow communication with other protocols. For example, using a programmable TCAP SLEE 12, an ISUP-to-TCAP converter could be used to allow communication with ISUP devices. The converter would add TCAP headers to incoming messages and strip TCAP headers from outgoing messages. This would allow an existing programmable message interface, such as the one found on the DSC INFUSION product, to be used in the SCP 10. Alternatively, SLEE 12 could be capable of communicating in a number of different protocols, similar to the SLEE discussed in connection with U.S. Ser. No. 60/086,971, referenced above.

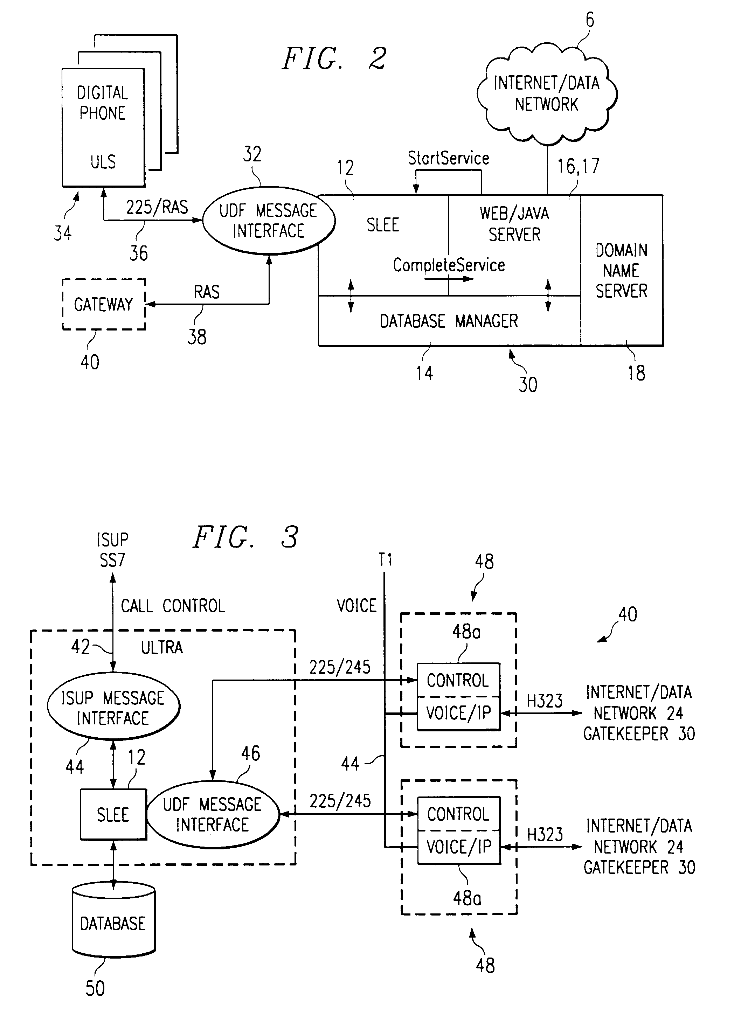

Figure 2 illustrates a gatekeeper device 30, which is based on the architecture SCP 10 of Figures 1b and 1c, In an H.323 network, a gatekeeper has four primary functions. First, the gatekeeper performs admission control; i.e., it determines whether or not a device can originate or terminate a call. Second, the gatekeeper performs bandwidth control, which is defined in the RAS (Registration. Admission and Status) specification. Third, the gateway performs address translation from LAN aliases for terminals and gateways to IP or IPX addresses (also defined in the RAS specification). Fourth, a gatekeeper oversees all terminals, gateways and MCUs (multipoint control units) within its zone (referred to as a Gatekeeper Zone).

The gatekeeper 30 shown in Figure 2 is similar to the SCP 10 shown in Figures 1b and 1c, but it adds an additional interface, UDF (user defined function) MSG interface 32. A UDF MSG is a user-defined SIB (service independent building block) which, in this case, handles control messages of the H.225 and H.245 protocols specified under H.323. The UDF MSG interface is connected to a ULS (universal locator service) 34 through a 225/RAS channel 36 and to one or more gateways 40 (described in greater detail in connection with Figure 3) through RAS channel 38.

The ULS is software operated by a network provider in order to log in users with the appropriate parameters. This software communicates directly with an Internet locator service of a server. The gatekeeper 30 registers permanent IP addresses on the Internet/Data Network 6 when the user first accesses the network and registers dynamically assigned IP addresses with each dial up session (since the user may be assigned a different IP address with each dial up session).

In operation, the gatekeeper, in addition to its required and optional services under the H.323 standard can also function to generate connections between digital phones, between PSTN phones and digital phones, and between PSTN phones using the information in the dynamic DNS 18 as described in connection with Figures 1b and 1c. It should be noted that while the gatekeeper 30 of Figure 2 is shown incorporating both a Web server 16 and a JAVA server 17, it could similarly be configured with only a JAVA server 17 as shown in connection with the SCP of Figure 1b.
Figure 3 illustrates a gateway 40. A gateway is a terminal that interfaces between networks, for example, between an H.323 network and the PSTN. In the illustrated embodiment, gateway 40 provides an interface point to the PSTN through ISUP connection 42 for call control and T1 connection 44 for analog voice information. ISUP/SS7 connection 42 is coupled to an ISUP MSG interface 44, which is coupled to SLEE 12. SLEE 12 includes a UDF MSG interface 46 which is coupled to Voice-over-IP (VoIP) boards 48 along with the T1 line 44. VoIP boards 48 include a control section 48a which receives H.225/245 commands from the SLEE 12 through the UDF MSG interface 46. SLEE 12 is also coupled to a database 50.

The VoIP boards 48 are DSP (digital signal processor) boards which translate between analog voice signals on the T1 line and packetized (IP) audio signals on the Internet/Data Network 6 under control of the control signals from the SLEE 12. The VoIP boards 48 can also send H.323 messages to the gatekeeper 30 and to other H.323 devices. VoIP boards are available from a variety of vendors, including DIALOGIC Communications Corporation.

In operation, the gateway 40 provides an interface point to the PSTN through ISUP and bearer channels, ISDN lines or the ATM backbone network. The basic call state model (BCSM) is contained within an SLP to be executed on the gateway's SLEE for both the ISUP, ISDN or ATM side and the H.323 side of the call. Messages from the ISUP/SS7 connection 42 are received by the ISUP MSG interface 44 (not necessary if the SLEE can receive ISUP signals directly) which wraps the messages in a TCAP header and passes the messages to the SLEE. Similarly, when outbound messages are sent from the SLEE 12 to the ISUP/SS7 channel, the ISUP MSG interface strips the TCAP headers.

On the H.323 side, the UDF MSG interface 46 strips the TCAP header information from outbound messages and re-encodes the messages using PER (Packed Encoding Rules). Inbound messages also pass through the UDF MSG interface 46, which changes the message from PER to BER (Basic Encoding Rules) encoding prior to sending the message to the SLEE 12.

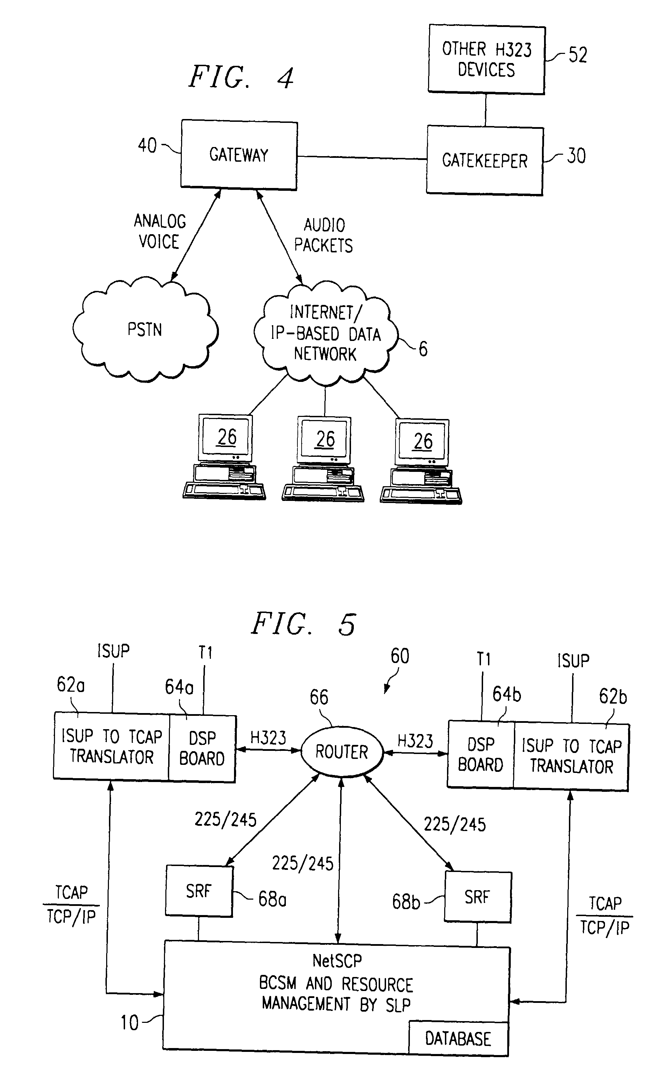

Figure 4 illustrates a simplified block diagram of a communications system where the PSTN and an Internet/Data Network 6 are coupled to gateway 40. along with gatekeeper 30. Gatekeeper 30 is also coupled to other H.323 devices 52. In this embodiment, users can create a communications channel between any combination of PSTN and H.323 devices (i.e., PSTN-to-PSTN, PSTN-to-H.323, or H.323-to-H.323). Further, multipoint communications between any combination of devices is supported.

For example, a user with only a PSTN device (i.e., a telephone) may call a number which is associated with a digital phone. This number would be sent in the PSTN to connect to gateway 40. Upon receiving the call, the gateway would be supplied with an ISUP message including the number called (destination number), the calling party number and charge number. The gatekeeper 30 would proceed to determine the IP address with which to form a connection. In this example, it will be assumed that the caller dials a number associated with a particular vendor, such as 1-800-FLOWERS. After registration and admission, the gateway 40 sends a message along with the destination number to the gatekeeper 30, requesting a look-up of the associated IP address. The gatekeeper 30 replies with routing information (an IP address and routing permission) to complete the call. As described above, the routing information determined by the gatekeeper 30 may be dependent upon a number of factors, including, for example, time of day, day of week, calling party number, destination number, and available operators for this service.
In an alternative method of connecting to a digital phone, the caller dials the number associated with gateway 40. The destination number does not indicate the final destination; once connected to the gateway 40, the user dials a second number indicating the destination. The gateway 40, after registration and admission, passes this number to gatekeeper 30, which determines the IP address associated with the destination.

Figure 5 illustrates an ISN (integrated service node) 60 for PSTN to PSTN communications. A first ISUP-to-TCAP translator 62a is coupled to an ISUP connection of a PSTN switch and a first VoIP board 64a is coupled to an associated T1 line. A second ISUP-to-TCAP translator 62b is coupled to an ISUP connection of a PSTN switch and a second VoIP board 64b is coupled to an associated T1 line. A router 66 is coupled to the H.323 side of the VoIP boards 64a and 64b, and also to SRF (service resource function) boards 68a-b and SCP 10. SCP 10 is also coupled to SRF boards 68a-b and to the ISUP-to-TCAP translators 62a-b.

In operation. when a connection is made. the voice signals from the bearer channel (T1 line) are translated into a stream of data packets by the corresponding VoIP board 64. The connection can be made either by passing the audio packets through the router to another VoIP board or by routing the packets through the router 66 back to the originating VoIP board. In either case, the packets are translated back into analog voice signals on the associated T1 line.

While the voice signals are packetized, however, the SRFs may control the data stream to play announcements, collect digits, perform voice recognition (identification), speech to text conversion, text to speech conversion, transfer packets to voicemail servers, perform facsimile store and forward, and other functions normally associated with an SRF. The SCP 10 can control the connections as discussed in connection with Figure 1. In the illustrated embodiment the SCP 10 performs the BCSM functions and controls the SRF according to one or more SLPs executed in the SCP's SLEE.

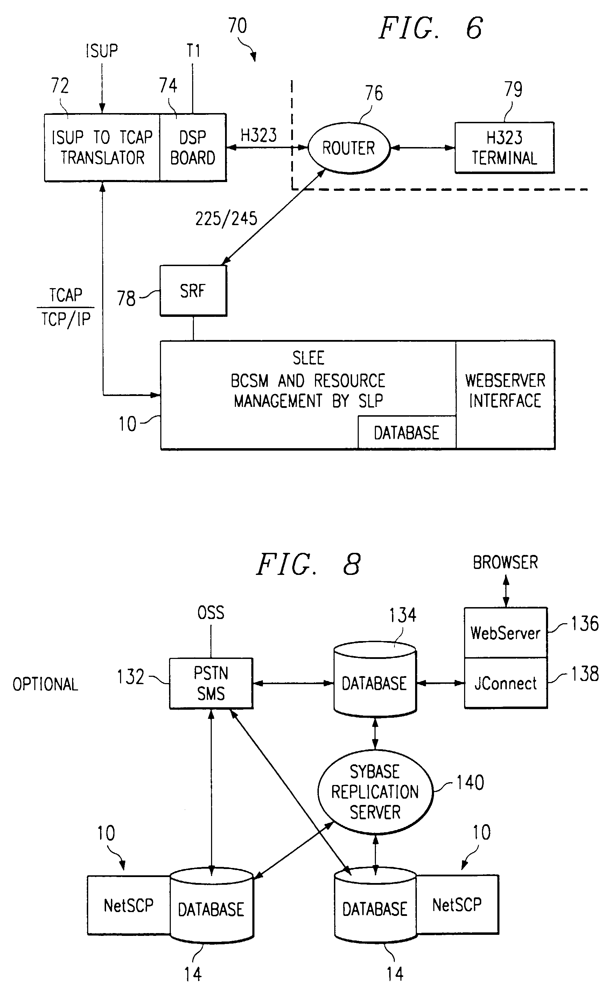

Figure 6 illustrates an IP (intelligent peripheral) 70, which can be used in connection with the PSTN and H.323 network. The IP 70 includes an ISUP-to-TCAP translator 72 coupled to an ISUP connection from the PSTN and a VoIP board 74 coupled to a corresponding T1 line. The ISUP-to-TCAP translator 72 is coupled to an SCP 10. The SCP 10 is coupled to an SRF 78. The VoIP board 74 and the SRF are coupled to a router 76, which may be coupled to other H.323 devices 79.

In operation. calls are transferred to the IP 70 as they would be in a normal PSTN scenario. The bearer channel is digitized and IP functions are added/removed/analyzed as packets, then decoded and placed on the bearer channel again. The call is then released back to the PSTN. The IP 70 can be concurrently used by an H.323 network at the same time. The SRF can perform a number of functions on the packetized information in the bearer channel, including playing announcements, collecting digits from tones, performing voice recognition (identification), performing speech to text conversion, performing text to speech conversion, transferring packets to voicemail servers, performing facsimile store and forward, and other functions normally associated with an SRF.

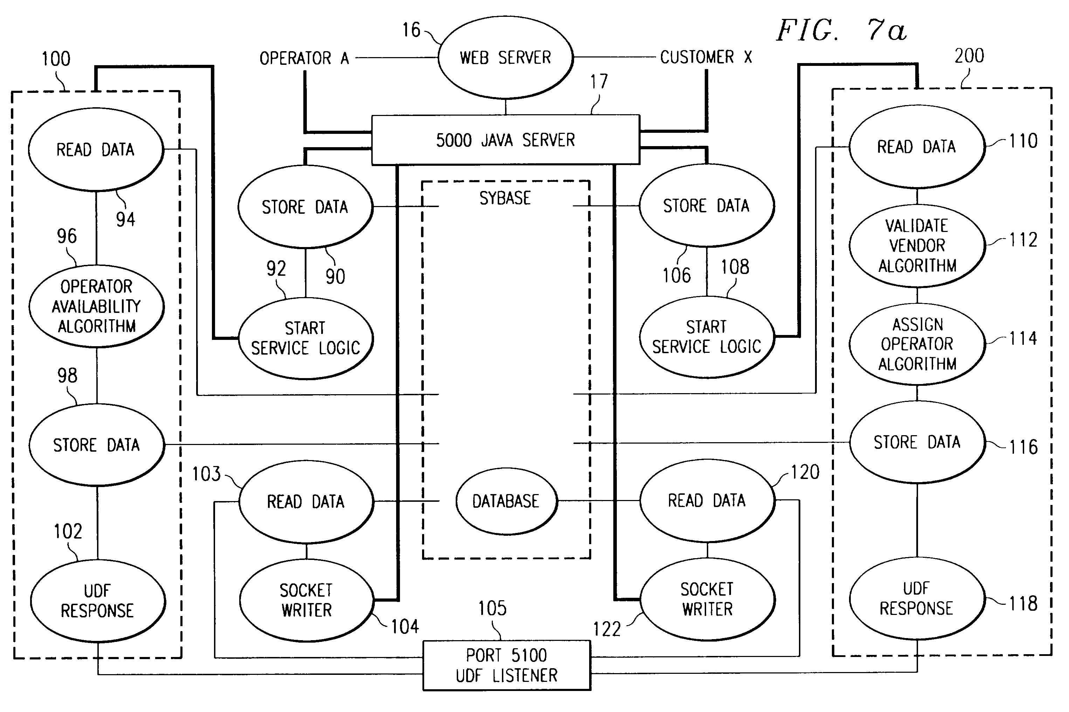

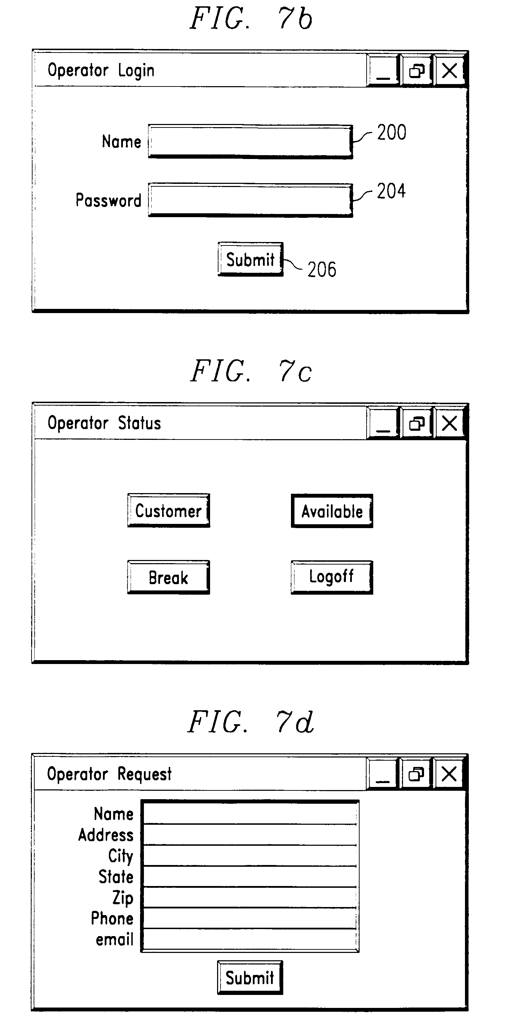

Figures 7a-d illustrates a call center application which could be performed using the SCP 10 of Figure 1. This application is useful for commercial services over the Internet, or other data network, where customers can request digital phone connection to operators of a vendor. The IP addresses associated with the operators will change over time as operators start and stop work. Further, the available operators will change during the day as operators become busy with customers, take breaks and so on. The SCP 10 manages the connections between customers and operators as efficiently as possible.

The operator begins the login process by requesting the login page from the web server via the Internet. This can be accomplished by entering an Internet address for the page. As sample operator login page is shown in Figure 7b, with input fields 200 and 202 for an operator name and password, and a submit button 204. The operator completes the login page by entering his or her name and password and presses the submit button. A JAVA applet sends the data from the form to the SCP 10, either directly (if the web server 16 and JAVA server 17 are at the same site) or via a relay at the web server (if the web server 16 is at a different site, in order to comply with JAVA security constructs). Upon receiving the data from the login form, the SCP 10 initiates operator-login service logic shown in blocks 90 and 92. The JAVA server 17 opens a socket and stores the data in the database 14 of the SCP 10. In block 92, the operator service logic begins. The SLEE 12 reads the operator data from the database in block 94 and validates the operator. Assuming a proper name and password were entered by the operator, a confirmation page is sent to the operator in block 96. which monitors that operators status. A sample confirmation/status page is shown in Figure 7c. In this embodiment, there are three buttons to allow the operator to indicate his or her present status: (1) Customer, for when the operator is busy with a customer, (2) Break. for when the operator is not with a customer but is temporarily unavailable and (3) Available, for when the operator is ready to receive a call from a customer. The active button, in this case the "Available" button, is colored to indicate the current status to the operator. Other interfaces. with different input graphics and different status levels could be used in place of this screen, as would be known to one skilled in the art. Whenever a status button is pressed, the data is stored in block 98. In block 102, control is handed to the UDF Listener 105. The UDF SIB 98 passes the correlation ID of the operator back to the JAVA server 17 through the UDF Listener 105. The UDF Listener 105 monitors different threads (multiple operators may be simultaneously running the service logic). In block 103 and 104, the JAVA server 17 collects data from the database and sends confirming information back to the operator.

Similarly, a customer can request a form page from a vendor via the Internet. For example, a user may be browsing a vendor's on-line catalog and wish to discuss a product with a customer service operator. A sample customer form page is shown in Figure 7d. Once the form page is completed and submitted by the customer, the JAVA applet on the customer's computer sends the data to the JAVA server 17 of the SCP 10, directly or indirectly, along with other information, such as the customer's IP address and browser type.

The JAVA server 17 opens a socket to receive and store the data in block 106. The vendor service logic starts in block 108. In block 110, the SLEE opens the database 14 and validates the vendor information in block 112. Assuming this is valid, the SLEE 12 collects the customer IP address, browser type and data from the form. In block 114, the assign operator routine begins, where the SLEE determines an active available operator. In block 116, the database is updated to reflect a busy operator, the start-time, and so on. In block 118, the UDF SIB is used to pass the correlation ID back to the JAVA server. In blocks 120 and 122, the JAVA server 17 reads the database 14 and contacts the chosen operator with data concerning the customers IP address, browser type and form data.

From this point, the operator can initiate a direct Internet connection with the customer via an appropriate conferencing package. such as NETSCAPE CONFERENCE or MICROSOFT NETMEETING. When the call is complete, the operator presses the "Available" button to update the status in block 96.

The application described above does not require a dynamic DNS. In an alternative architecture, the dynamic DNS 18 would be updated from a default message when the first operator logs in. Subsequent operators would then be placed in a buffer prior to being rotate to the dynamic DNS 18. Customer inquiries could then be routed directly to operators using generic URLs, but without service logic capability associated with the customer. This scheme would impose operator actions, such as accepting or completing calls, to update operator status. However, multiple messages from a customer to the same operator would be more difficult to support.

Figure 8 illustrates an SMS 130 (service management system) to provide remote service management and provisioning functions by the OSS (operation support services). The SMS 130 is coupled to a redundant pair of SCPs 10. The SMS 130 includes a PSTN SMS 132 coupled to a master database 134. A web server 136 is coupled to the Internet or to another data network and to the master database through database connectivity software 138, such as JCONNECT from SYBASE, INC. A replication server 138 is coupled to databases 14 of two redundant SCPs 10. The PSTN SMS is also coupled directly to the databases 14.

In operation, the master database 134 could be modified through the PSTN SMS or through the web server 136. The replication server copies changes made to one of the databases 134 or 14, to the other databases, so that all databases are in sync with one another. The SMS 130 allows users to provision and configure services via the Internet. For example, telephone customers could add/delete/modify services over the Internet without intervention by telephone company or ISP personnel. Further, telephone company and ISP personnel could perform service modifications over the Internet, providing more sophisticated HTML (hypertext markup language) and JAVA interfaces and allowing more personnel to work in a variety of locations.

The devices described herein provide significant advantages over the prior art. First, the use of a programmable SLEE in the network devices provides for rapid development and deployment of products and for flexible implementation of services. Second, the devices can be used to gain control of telephone calls, even those originating and/or terminating on the PSTN, in a digital domain. One particular embodiment of the capability would be in conference calling, where callers could control the conference via a web browser. This would enable callers to have private conversations with another conference caller, and so on, while the conference was ongoing, even if one or more of the participants was connecting through the PSTN. The services are seamless to the users, who have the same functionality whether independent of whether lines of communication originate or terminate on the Internet or the PSTN. Third, telephony services can be initiate via JAVA applets (or a similar software structure, which is preferable processor independent) which can enhance and simplify telecommunications services to users.

## Claims

1. A telecommunications system comprising:
a public switched telephone system;
a data network (6);
interface circuitry (7) coupled between said public switched telephone system and said data network (6) for translating between analog voice signals and a stream of packetized voice signals;
and,
control circuitry (8) coupled to said public switched telephone network and said data network to control communication within and between said public switched telephone system and said data network.

2. A telecommunications system according to claim 1, wherein said data network (6) comprises the Internet.

3. A telecommunications system according to claim 1 or 2, wherein said control circuitry (8) includes:
a database (50); and,
a programmable execution unit (12) coupled to said database.

4. A telecommunications system according to claim 3, further comprising a language server coupled to the programmable execution unit (12) to communicate with applications executed on client terminals in said network.

5. A telecommunications system according to claim 4, wherein said language server comprises a JAVA server (17).

6. A telecommunications system according to claim 4 or 5, wherein said client terminals execute JAVA applets running under browser software .

7. A telecommunications system according to any of claims 4 to 6, wherein said language server initiates telephony services between the data network (6) and the public switched telephone network.

8. A telecommunications system according to any of claims 4 to 7, wherein said language server initiates telephony services between the nodes on the data network (6).

9. A telecommunications system according to any of claims 4 to 8, wherein said language server initiates telephony services between the nodes on the public switched telephone network.

10. A telecommunications system according to any preceding claim, wherein said control circuitry (8) is operable to modify said stream of packetized voice signals.

11. A service control point for use with a multimedia communication protocol. comprising:
a database (50);
a database manager (14) coupled to said database;
a programmable execution unit (12) coupled to said database manager (14); and,
a language server coupled to the programmable execution unit (12) to communicate with applications executed on client terminals coupled to said language server via a data network.

12. A service control point according to claim 11, wherein said database comprises a domain name server (18).

13. A service control point according to claim 12, wherein said domain name server (18) associates domain names and network addresses based on current values of a pre-selected set of parameters.

14. A service control point according to any of claims 11 to 13, wherein said programmable execution unit (12) executes service logic programs.

15. A service control point according to claim 14, wherein said execution of one or more of said service logic programs by said programmable execution unit (12) can be initiated by through the data network (6) via the language server.

16. A service control point according to any of claims 11 to 15, wherein said language server comprises a JAVA server (17) for communication with JAVA applet executed on client terminals.

17. A service control point according to any of claims 11 to 16, further comprising a web server (16) coupled to said language server and said client terminals.

18. A service control point according to any of claims 11 to 17, wherein said programmable execution unit (12) is coupled to one or more universal locator services for identifying an IP address associated with a user.

19. A service control point according to any of claims 11 to 17, wherein said programmable execution unit (12) is coupled to service resource function boards to operate as an intelligent peripheral (IP) device.

20. A service control point according to claim 19, wherein said programmable execution unit (12) is further coupled to an ISUP to TCAP translator (62a, 62b, 72).
